# EUROPÄISCHE PATENTANMELDUNG

(11) **EP 4 047 260 A1**
(43) Veröffentlichungstag der Anmeldung: **24.08.2022**
(21) Anmeldenummer: 21020299.0
(22) Anmeldetag: 08.06.2021
(51) Int. Cl.: F17D 1/04, F17D 3/12

(54) **VERFAHREN ZUR STEUERUNG ODER REGELUNG EINES WASSERSTOFFGEHALTES EINES DURCH EIN ERDGASNETZ TRANSPORTIERTEN ERDGASES**

(30) Priorität: 18.02.2021 EP 21020081
(71) Anmelder: Linde GmbH, 82049 Pullach (DE)
(72) Erfinder: Koerner, Marc-Oliver, München (DE)
(74) Vertreter: Lu, Jing

(57) **Zusammenfassung**

Verfahren zur Steuerung oder Regelung eines Wasserstoffgehaltes eines durch ein Erdgasnetz transportierten Erdgases, mit folgenden Schritten:
- Feststellung des Wasserstoffgehaltes in einem durch das Erdgasnetz transportierten Erdgas mit einem variablen Wasserstoffgehalt,
- Feststellung, ob der Wasserstoffgehalt unterhalb eines vorbestimmten Grenzwertes liegt, und
- für den Fall, dass der Wasserstoffgehalt unterhalb des vorbestimmten Grenzwertes liegt, Zumischen von weiterem Wasserstoff oder wasserstoffhaltigem Gas

## Beschreibung

Die vorliegende Erfindung bezieht sich auf ein Verfahren zur Steuerung oder Regelung eines Wasserstoffgehaltes eines durch ein Erdgasnetz transportierten Erdgases.

Die Ausnutzung von erneuerbaren Energien, beispielsweise durch Umwandlung von Windenergie oder Sonnenenergie in elektrische Energie, erfolgt oft nicht an den unmittelbaren Orten des Verbrauchs und auch nicht zum Zeitpunkt des Verbrauchs. Es wird daher angestrebt, die so erzeugte elektrische Energie zunächst mittels Wasserelektrolyse in Wasserstoff umzuwandeln und zu speichern. Diese Herstellung von Wasserstoff erfolgt meistens dezentral, beispielsweise in unmittelbarer Nachbarschaft von Windparks. Die Specherung und der Transport von Wasserstoff über größere Distanzen ist wesentlich effektiver zu bewerkstelligen als die Speicherung und der Transport von elektrischer Energie.

Derart hergestellter Wasserstoff kann in das flächendeckend verfügbare Erdgasnetz eingespeist werden. Typischerweise liegt die Menge an Wasserstoff, der dem durch das Erdgasnetz transportierten Erdgas beigemischt werden kann, bei 1 bis 10 Volumenprozent (Vol.-%). Diese begrenzte Zumischbarkeit von Wasserstoff folgt daraus, dass sich Wasserstoff sowohl hinsichtlich seiner Brennstoffeigenschaften als auch seiner chemischen Eigenschaften signifikant von Erdgas unterscheidet. Hiermit können sich Auswirkungen auf angeschlossene kritische Gasanwendungen ergeben. Gleichzeitig schwankt die Menge der zum Beispiel durch einen Windpark oder ein Sonnenkraftwerk zu Verfügung gestellten elektrischen Energie aufgrund der natürlichen Schwankungen des Windes oder des Sonnenlichts. Hierdurch variiert auch die Menge des durch Elektrolyse erzeugbaren Wasserstoffs.

Zur Optimierung des Energietransportes mittels Wasserstoff in einem derartigen Erdgasnetz ist es erstrebenswert, innerhalb des voreinstellbaren oder zulässigen Bereiches möglichst hohe Wasserstoffanteile im transportierten Erdgas bereitzustellen.

Die vorliegende Erfindung strebt eine Verbesserung des Wasserstofftransportes in einem Erdgasnetz an.

Die vorliegende Erfindung schlägt hierzu ein Verfahren mit den Merkmalen des Patentanspruchs 1 sowie eine entsprechende Vorrichtung mit den Merkmalen des Patentanspruchs 6 vor.

Gemäß dem erfindungsgemäßen Verfahren zur Steuerung oder Regelung eines Wasserstoffgehaltes eines durch ein Erdgasnetz transportierten Erdgases erfolgt eine Feststellung des Wasserstoffgehaltes in einem durch das Erdgasnetz transportierten Erdgas, welches einen variablen Wasserstoffgehalt aufweist, eine Feststellung, ob der Wasserstoffgehalt unterhalb eines vorbestimmten Grenzwertes liegt, und für den Fall, dass der Wasserstoffgehalt unterhalb des vorbestimmten Grenzwertes liegt, eine Zumischung von weiterem Wasserstoff oder wasserstoffhaltigem Gas.

Zweckmäßigerweise erfolgt die Zumischung von weiterem Wasserstoff oder wasserstoffhaltigem Gas solange, bis der vorbestimmte Grenzwert erreicht ist. Dieses Zumischen kann insbesondere im Rahmen eines Regelkreises erfolgen.

Gemäß einer bevorzugten Ausgestaltung des erfindungsgemäßen Verfahrens erfolgt die Feststellung des Wasserstoffgehaltes stromabwärts von der Zumischung des zusätzlichen Wasserstoffs, wobei in Abhängigkeit von dieser Feststellung die Zumischung von zusätzlichem Wasserstoff oder wasserstoffhaltigem Gas gesteuert bzw. geregelt wird. Diese Ausgestaltung stellt somit einen Regelkreis mit einer der Zumischung nachlaufenden Analyse des Wasserstoffgehaltes des Erdgases zur Verfügung.

Gemäß einer weiteren bevorzugten Ausgestaltung des erfindungsgemäßen Verfahrens erfolgt die Feststellung des Wasserstoffgehaltes stromaufwärts von der Zumischung des zusätzlichen Wasserstoffs, wobei in Abhängigkeit von dieser Feststellung die Zumischung von zusätzlichem Wasserstoff oder wasserstoffhaltigem Gas geregelt bzw. gesteuert wird. Diese Ausführungsform stellt somit einen Regelkreis mit einer der Zumischung vorlaufenden Analyse des Wasserstoffgehaltes des transportierten Erdgases zur Verfügung.

Zweckmäßigerweise erfolgt stromabwärts von der Zumischung von zusätzlichem Wasserstoff oder wasserstoffhaltigem Gas eine Pufferung oder Zwischenspeicherung des Erdgases. Eine derartige Pufferung bzw. Zwischenspeicherung ermöglicht die Speicherung von Erdgas mit einem optimal eingestellten Wasserstoffgehalt. Eine Pufferung kann auch zum Ausgleich von Konzentrations- oder Druckschwankungen eingesetzt werden Die Verwendung eines Puffers stellt eine sehr vorteilhafte Möglichkeit zur Durchführung einer Konzentrationsmessung dar.

Die erfindungsgemäße Vorrichtung zeichnet sich durch einen Analysator aus, der einem Mischer zur Zumischung von zusätzlichem Wasserstoff vor oder nachgeschaltet ist.

Eine Puffereinrichtung ist hierbei zweckmäßigerweise stromabwärts von dem Mischer vorgesehen.

In besonders vorteilhafterweise kann der zur Feststellung des Wasserstoffgehaltes eingesetzte Analysator auch zur Analyse des zusätzlichen Wasserstoffs oder wasserstoffhaltigen Gases, der bzw. das über den Mischer dem durch das Erdgasnetz transportierten Erdgas zugegeben wird, verwendet werden. Es ist gleichfalls denkbar, für diese Zwecke zwei voneinander unabhängige Analysatoren einzusetzen.

Bevorzugte Anwendungen des erfindungsgemäßen Verfahrens, mittels dessen Erdgas mit einem über die Zeit sehr stabilen Wasserstoffanteil bereitgestellt werden kann, sind zum Beispiel Schneideanwendungen, Vorwärmanwendungen oder Wärmebehandlungsanwendungen. Beispielsweise seien in diesem Zusammenhang optimale Schneidgase für das Schneiden von Kohlenstoff-Stahl erwähnt, welche typischerweise 90% Erdgas und 10% Wasserstoff beinhalten. Ein derartiges Gas kann auch als Brenngas zum Vorwärmen von Stahl vor einem Schweissvorgang eingesetzt werden, wobei das Design der Vorwärmbrenner durch den Einsatz eines Gases mit stabilem Wasserstoffgehalt zum Beispiel bezüglich der Zündgeschwindigkeit des Brenngases unter Berücksichtigung von Bohrbild, Lochtiefe und Mischstrecke optimiert werden kann. Auch sei auf vorteilhafte Verwendungen im Zusammenhang mit Wärmebehandlungsöfen hingewiesen, bei welchen durch die Verwendung eines erfindungsgemäß bereitgestellten Gases als Brenngas Luft-Brenngas- oder Sauerstoff-Brenngas-Gemische optimal eingestellt werden können.

Die Erfindung wird nun anhand der beigefügten Zeichnung weiter erläutert. In dieser zeigt
Figur 1 eine erste bevorzugte Ausführungsform der erfindungsgemäßen Vorrichtung, die geeignet ist zur Durchführung des erfindungsgemäßen Verfahrens,
Figur 2 eine zweite bevorzugte Ausführungsform der erfindungsgemäßen Vorrichtung, die geeignet ist zur Durchführung des erfindungsgemäßen Verfahrens, und
Figur 3 ein Flussdiagramm zur Veranschaulichung einer bevorzugten Ausführungsform des erfindungsgemäßen Verfahrens.

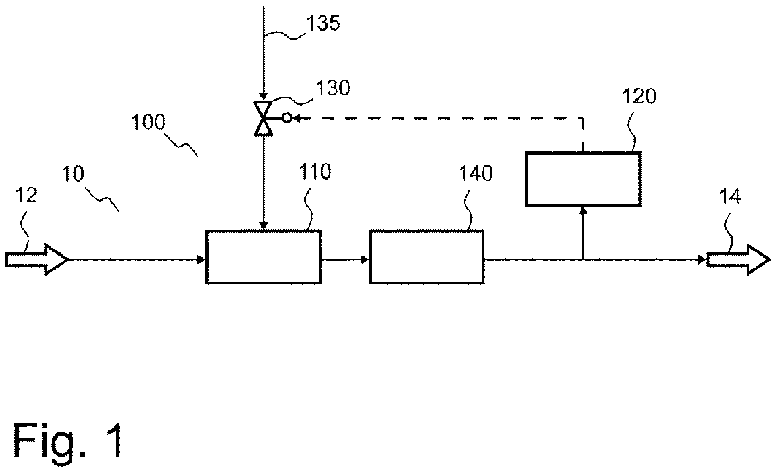

In Figur 1 ist eine Leitung eines Erdgasnetzes ist schematisch dargestellt und mit 10 bezeichnet. Bezüglich der im folgenden dargestellten bevorzugten Ausführungsform der erfindungsgemäßen Vorrichtung weist diese Leitung einen Eingang, über den Erdgas mit einem schwankenden Wasserstoffanteil der Vorrichtung zugeführt, und einen Ausgang 14, über den Erdgas beispielsweise nach Abgabe aus der Vorrichtung einer Anwendung zugeführt wird, auf. Zwischen Eingang 12 und Ausgang 14 ist eine bevorzugte Ausführungsform einer erfindungsgemäßen Vorrichtung dargestellt und insgesamt mit 100 bezeichnet.

Die Vorrichtung 100 weist einen Mischer 110, einen Gasanalysator bzw. Analysator 120, ein regelbares Ventil 130 und einen Puffer 140 auf.

Erdgas mit einem schwankenden Wasserstoffanteil, welches beispielsweise mittels Wasserelektrolyse unter Verwendung von Windenergie oder Sonnenenergie hergestellt ist, wird über die Leitung 10 durch den Mischer 110 geführt. Der Wasserstoffanteil wird stromabwärts des Mischers 140 von dem Analysator ermittelt. Für den Fall, dass der von dem Analysator ermittelte Wasserstoffanteil unter einem voreinstellbaren bzw. vorgegebenen Grenzwert liegt, steuert der Analysator das Regelventil 130 an, und öffnet dieses, so dass über eine Wasserstoffversorgungsleitung 135 zusätzlicher Wasserstoff dem Mischer zugeführt wird. Hierdurch erhöht sich der Wasserstoffanteil des aus dem Mischer 110 austretenden Erdgases, welcher wiederum mittels des Analysators 120 erfasst wird. Insgesamt ist somit ein dem Mischer 110 nachlaufender Regelkreis zur Verfügung gestellt, wobei der Analysator das Regelventil 130 solange offen hält, wie der von dem Analysator 120 ermittelte Wasserstoffanteil unterhalb des vorbestimmten Grenzwertes liegt.

Insgesamt ergibt sich hierdurch am Ausgang 14 ein Erdgas mit im Wesentlichen konstantem Wasserstoffanteil, der verschiedenen Anwendungen zur Verfügung gestellt werden kann.

Optional ist zwischen dem Mischer 110 und dem Analysator 120 der bereits erwähnte Puffer vorgesehen, in welchem Erdgas beispielsweise zwischengespeichert werden kann. Ein derartiger Puffer kann vorteilhaft zum Ausgleich von Druck- oder Konzentrationsschwankungen oder als optimaler Ort für die Durchführung von Konzentrationsmessungen verwendet werden.

Der Analysator 120 kann zusätzlich auch zur Analyse des über die Leitung 135 dem Mischer 110 zugeführten zusätzlichem Wasserstoffs verwendet werden. Es ist jedoch auch möglich, einen separaten bzw. unabhängigen weiteren Analysator (nicht dargestellt) zu diesem Zwecke zu verwenden.

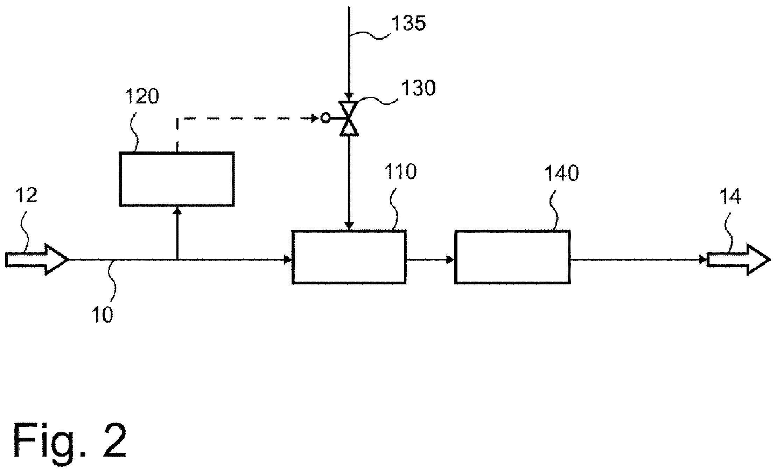

In Figur 2 ist eine weitere Ausführungsform der erfindungsgemäßen Vorrichtung dargestellt. Die Komponenten entsprechen hierbei den Komponenten gemäß der Ausführungsform der Figur 1, und sind daher auch mit gleichen Bezugszeichen versehen.

Die Ausführungsform der Figur 2 unterscheidet sich von der Ausführungsform der Figur 1 lediglich dadurch, dass der Analysator 120 stromaufwärts des Mischers 110 vorgesehen ist. Dies bedeutet, dass über den Eingang 12 eintretendes und über die Leitung 10 fließendes Erdgas mit schwankendem Wasserstoffanteil bereits stromaufwärts von dem Mischer 110 analysiert wird. Für den Fall, dass der aktuelle Wasserstoffanteil unterhalb des vorbestimmten Grenzwertes liegt, steuert der Analysator 120 das Regelventil 130 an, so dass zusätzlicher Wasserstoff über die Leitung 135 dem Mischer 110 zugeführt werden kann.

Der Puffer 140 ist, wie auch bei der Ausführungsform gemäß Figur 1 stromabwärts von dem Mischer 110 vorgesehen. Auch bei dieser Ausführungsform könnte ein zusätzlicher Analysator zur Analyse bzw. Feststellung des Wasserstoffgehaltes bzw. der Zusammensetzung des zusätzlichen Wasserstoffs eingesetzt werden.

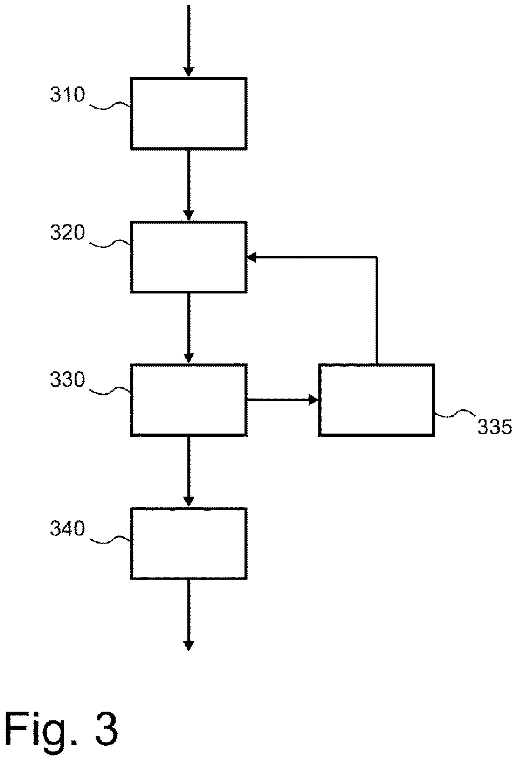

Eine bevorzugte Ausführungsform des erfindungsgemäßen Verfahrens wird nun anhand des Flussdiagramms der Figur 3 dargestellt.

In einem ersten Schritt 310 wird der Wasserstoffgehalt eines durch ein Erdgasnetz transportierten Erdgases einer erfindungsgemäßen Vorrichtung 100 zugeführt.

In einem anschließenden Schritt 320 wird der Wasserstoffgehalt dieses Erdgases festgestellt. In einem anschließenden Schritt 330 wird festgestellt, ob der Wasserstoffgehalt unterhalb eines zulässigen bzw. vorbestimmen Grenzwertes liegt.

Ist dies der Fall, wird der Wasserstoff in einem Schritt 340, gegebenenfalls nach Zwischenspeicherung in dem Puffer 140, einer Anwendung zugeführt.

Wird in Schritt 330 jedoch festgestellt, dass der Wasserstoffgehalt unterhalb des vorbestimmten Grenzwertes liegt, wird in einem Schritt 335 weiterer Wasserstoff dem Erdgas zugemischt, woraufhin das Verfahren zu Schritt 320 zurückkehrt. Der Kreislauf bzw. Regelkreis der Schritte 320, 330, 335 wird solange durchlaufen, bis in Schritt 330 festgestellt wird, dass der Wasserstoffgehalt des Erdgases den Grenzwert erreicht hat. In diesem Fall verzweigt das Verfahren zu Schritt 340.

Alternativ zum Vergleich des Wasserstoffgehaltes des Erdgases mit einem Grenzwert ist es auch möglich, festzustellen, ob der Wasserstoffgehalt in einem vorbestimmten Bereich, welcher durch einen unteren und einen oberen Grenzwert definiert ist, liegt.

Für den Fall, dass festgestellt wird, dass der Wasserstoffgehalt oberhalb des vorbestimmten Grenzwertes oder eines derartigen oberen Grenzwertes liegt, ist der Vorrichtung 100, wie sie oben beschrieben wurde, zweckmäßigerweise eine weitere Vorrichtung nachgeschaltet, über welche das durch die Vorrichtung 100 fließende Erdgas mit weiterem Erdgas mit einem geringeren Wasserstoffanteil vermischt werden kann, sodass insgesamt der Erdgasanteil des aus einer derartigen weiteren Vorrichtung austretenden Erdgases wiederum einen Wasserstoffanteil unterhalb des vorbestimmten Grenzwertes aufweist.

Eine erfindungsgemäße Vorrichtung kann zweckmäßigerweise in unmittelbarer Nähe zu einer Windkraftanlage oder einem Sonnenkraftwerk bereitgestellt werden. Der über die Leitung 135 dem durch die Leitung 10 strömenden Erdgas zugegebene Wasserstoff kann hierbei zweckmäßigerweise aus einem der Windkraftanlage oder dem Sonnenkraftwerk zugeordneten Wasserstofftank entnommen werden.

## Patentansprüche

1. Verfahren zur Steuerung oder Regelung eines Wasserstoffanteils eines durch ein Erdgasnetz transportierten Erdgases, mit folgenden Schritten:
- Feststellung des Wasserstoffgehaltes in einem durch das Erdgasnetz transportierten Erdgas mit einem variablen Wasserstoffgehalt,
- Feststellung, ob der Wasserstoffgehalt unterhalb eines vorbestimmten Grenzwertes liegt, und
- für den Fall, dass der Wasserstoffgehalt unterhalb des vorbestimmten Grenzwertes liegt, Zumischung von weiterem Wasserstoff oder wasserstoffhaltigem Gas.

2. Verfahren nach Anspruch 1, bei dem die Zumischung von weiterem Wasserstoff oder wasserstoffhaltigem Gas solange erfolgt, bis der vorbestimmte Grenzwert erreicht ist

3. Verfahren nach Anspruch 1 oder 2, wobei die Feststellung des Wasserstoffgehaltes stromabwärts von der Zumischung des zusätzlichen Wasserstoffs oder wasserstoffhaltigen Gases erfolgt, wobei in Abhängigkeit von dieser Feststellung die Zumischung von zusätzlichem Wasserstoff oder wasserstoffhaltigem Gas gesteuert bzw. geregelt wird.

4. Verfahren nach einem der Ansprüche 1 oder 2, wobei die Feststellung des Wasserstoffgehaltes stromaufwärts von der Zumischung des zusätzlichen Wasserstoffs oder wasserstoffhaltigen Gases erfolgt, wobei in Abhängigkeit von dieser Feststellung das Zumischen von zusätzlichem Wasserstoff oder wasserstoffhaltigem Gas gesteuert bzw. geregelt wird.

5. Verfahren nach einem der vorstehenden Ansprüche, wobei stromabwärts von dem Zumischen des zusätzlichen Wasserstoffs oder wasserstoffhaltigen Gases eine Pufferung des Erdgases erfolgt.

6. Vorrichtung zur Durchführung des Verfahrens nach einem der vorstehenden Ansprüche, mit einem Analysator (120) zum Feststellen des Wasserstoffgehaltes in einem durch ein Erdgasnetz transportierten Erdgas und zur Feststellung, ob der Wasserstoffgehalt unterhalb eines vorbestimmten Grenzwertes liegt, einem Mischer (110) zur Zumischung von zusätzlichem Wasserstoff oder wasserstoffhaltigem Gas für den Fall, dass durch den Analysator (120) festgestellt wird, dass der Wasserstoffgehalt des Erdgases unter dem vorbestimmten Grenzwert liegt, und einem durch den Analysator (120) steuerbaren bzw. regelbaren Ventil (130) zur Öffnung einer Leitung (135), über die zusätzlicher Wasserstoff oder wasserstoffhaltiges Gas dem Mischer (110) zugemischbar ist.

7. Vorrichtung nach Anspruch 6, wobei der Analysator (120) stromabwärts des Mischers (110) vorgesehen ist.

8. Vorrichtung nach Anspruch 6, wobei der Analysator (120) stromaufwärts des Mischers (110) vorgesehen ist.
